# EUROPÄISCHE PATENTSCHRIFT

(11) **EP 3 589 676 B1**
(45) Veröffentlichungstag und Bekanntmachung des Hinweises auf die Patenterteilung: **21.04.2021**
(21) Anmeldenummer: 18706762.4
(22) Anmeldetag: 28.02.2018
(51) Int. Cl.: C08G 18/66, C08G 18/76, C08G 18/28, C08G 18/32, C08G 18/40, C08G 18/42

(54) **SCHLAGZÄHE THERMOPLASTISCHE POLYURETHANE, DEREN HERSTELLUNG UND VERWENDUNG**
LOW TEMPERATURE IMPACT RESISTANT THERMOPLASTIC POLYURETHANES
POLYURÉTHANES THERMOPLASTIQUES RÉSISTANT À L'IMPACT À BASSE TEMPÉRATURE

(30) Priorität: 02.03.2017 EP 17158800
(43) Veröffentlichungstag der Anmeldung: 08.01.2020
(73) Patentinhaber: Covestro Intellectual Property GmbH & Co. KG, 51373 Leverkusen (DE)
(72) Erfinder: SHEN, Yi, 41539 Dormagen (DE); REICHERT, Peter, 41541 Dormagen (DE)
(74) Vertreter: Levpat
(86) Internationale Anmeldenummer: PCT/EP2018/054954
(87) Internationale Veröffentlichungsnummer: WO 2018/158327

(56) Entgegenhaltungen:
- US-A- 4 980 445

## Beschreibung

Die vorliegende Erfindung betrifft Polyester-basierte harte thermoplastische Polyurethansysteme, die bei tiefen Temperaturen schlagzäh sind, deren Herstellung und Verwendung.

Thermoplastische Polyurethan-Elastomere (TPU) sind seit langem bekannt. Sie sind von großer technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. Die TPU können kontinuierlich oder diskontinuierlich hergestellt werden. Die bekanntesten technischen Herstellverfahren sind das Bandverfahren (GB 1057018 A) und das Extruderverfahren (DE 1964834 A und DE 2059570 A).

Bei einem Vergleich von Polyether- und Polyester-basierten TPU zeigen Polyether-basierte eine bessere Tieftemperaturflexibilität, dagegen sind die mechanischen Eigenschaften der Polyester-basierten TPU bei Raumtemperatur besser. Für viele Anwendungen, die nur kurzzeitigen tiefen Temperaturen ausgesetzt sind, wählt man daher aufgrund der vorteilhaften mechanischen Eigenschaften Polyester-basierte TPU. Dabei wird häufig ein Schlagzähmodifikator zugesetzt, um die Kälteschlagzähigkeit zu verbessern. Normalerweise werden Polymere, wie zum Beispiel Copolymere aus Acrylnitril, Butadien und Styrol (ABS) als Schlagzähmodifikator eingesetzt. Allerdings ist es technisch nicht einfach, ein solches Material homogen in das TPU bei dessen Herstellung einzuarbeiten.

Die Aufgabe der Erfindung war daher, alternative Schlagzähmodifikatoren bereitzustellen, die sich möglichst homogen bei der TPU-Herstellung einarbeiten lassen und eine gute Tieftemperaturflexibilität des TPU gewährleisten, ohne die sonstigen guten mechanischen Eigenschaften negativ zu beeinflussen.

Diese Aufgabe konnte überraschenderweise dadurch gelöst werden, dass anstelle der kommerziell erhältlichen Schlagzägmodifikatoren Polyetherpolyole mit einem hohen Molekulargewicht eingesetzt werden. Diese haben zusätzlich den Vorteil, dass sie bei der Herstellung des TPU eingebaut werden.

Durch diese Polyetherpolyole können sowohl die Tieftemperaturflexibilität des TPU verbessert als auch gleichzeitig die Komplexität der TPU Herstellung reduziert werden. Durch die gezielte Verwendung der Polyetherpolyole als Schlagzähmodifikatoren konnte die Tieftemperaturschlagzähigkeit des TPU verbessert und seine Herstellung einfach gestaltet werden.

Gegenstand der Erfindung sind daher thermoplastisch verarbeitbare Polyurethanelastomere mit einer Härte von 56 bis 85 Shore D (gemäß ISO 7619-1:2012-02) erhältlich aus der Reaktion der Komponenten
a) ein oder mehrere im Wesentlichen lineare Polyesterpolyole mit einer zahlenmittleren Funktionalität von 1,8 bis 2,2 und einem zahlenmittleren Molekulargewicht von 500 bis 4000 g/mol auf Basis von Dicarbonsäuren ausgewählt aus der Gruppe bestehend aus Adipinsäure, Bernsteinsäure, Terephthalsäure und deren Derivaten und auf Basis von Dialkoholen ausgewählt aus der Gruppe bestehend aus Ethandiol, 1,4-Butandiol, 1,3-Propandiol, 1,6-Hexandiol und Neopentylglycol, und gegebenenfalls 0 bis 60 Gew.-% Polycarbonatdiol auf Basis von 1,6-Hexandiol,
b) ein oder mehrere im Wesentlichen lineare Polyetherpolyole mit einer zahlenmittleren Funktionalität von 1,9 bis 2,1 und einem zahlenmittleren Molekulargewicht von 4000 bis 20000 g/mol auf Basis von Propylenoxid oder Propylenoxid/Ethylenoxid-Gemischen,
c) ein oder mehrere organische Diisocyanate,
d) ein oder mehrere Diole mit einem zahlenmittleren Molekulargewicht von 60 bis 250 g/mol als Kettenverlängerungsmittel,
   in Gegenwart von
e) gegebenenfalls Katalysatoren,
f) gegebenenfalls Hilfs- und/oder Zusatzstoffen,
g) gegebenenfalls monofunktionellen Kettenabbrechern,
wobei das molare Verhältnis der NCO-Gruppen zu den OH-Gruppen von 0,9 zu 1 bis 1,1 zu 1 und das Gewichtsverhältnis der Polyetherpolyole (b) zu den Polyesterpolyolen (a) von 5 zu 95 bis 30 zu 70 beträgt.

Die erfindungsgemäßen thermoplastischen Polyurethane können im bekannten one-shot Verfahren oder Pre-Polymer Verfahren hergestellt werden.

Geeignete Polyesterdiole (a) können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterpolyole kann es gegebenen¬falls vorteilhaft sein, anstelle der Dicarbonsäuren die entsprechenden Dicarbon¬säurederivate, wie Carbon¬säurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, wobei Polycarbonatdiole entstehen, insbesondere mit solchen mit 4 bis 6 Kohlenstoffatomen, wie 1,4-Butandiol oder 1,6-Hexandiol, Konden¬sationsprodukte von Hydroxy¬carbon¬säuren, beispielsweise Hydroxycapronsäure und Poly¬meri¬sations¬¬produkte von Lactonen, beispiels¬weise gegebenenfalls substituierten Capro¬lactonen. Als Polyesterpolyole werden vorzugsweise Ethandiol-polyadipate, 1,4-Butan¬diol-poly¬adipate, 1,6-Hexandiol-polyadipate, Ethandiol-1,4-butandiol-poly¬adipate, 1,6-Hexandiol-neopentylglykol-poly¬adipate, 1,6-Hexan¬diol-1,4-butan¬diol-poly¬adipate und Polycaprolactone verwendet. Die Polyesterdiole besitzen Molekulargewichte von 500 bis 4000 g/mol, vorzugsweise 900 bis 2500 g/mol und können einzeln oder in Form von Mischungen untereinander zur Anwendung kommen.

Geeignete Polyetherpolyole (b) können dadurch hergestellt werden, dass man ein Alkylenoxid mit 2 und/oder 3 Kohlenstoffatomen im Alkylenrest mit einem Startermolekül, das zwei aktive Wasserstoffatome gebunden enthält, umsetzt. Als Alkylenoxide werden Ethylenoxid und Propylenoxid eingesetzt. Als Startermoleküle kommen beispielsweise in Betracht: Diole, wie Ethylenglykol, 1,2-Propylenglykol, 1,3-Propylenglykol, 1,4-Butandiol und 1,6-Hexandiol. Die im wesentlichen linearen Polyetherpolyole besitzen Molekulargewichte von 4000 bis 20000 g/mol, bevorzugt 4000 bis 12000 g/mol, besonders bevorzugt 4000 bis 8500 g/mol. Sie können sowohl einzeln als auch in Form von Mischungen untereinander zur Anwendung kommen.

Als organische Diisocyanate (c) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Als Kettenverlängerungsmittel (d) werden Diole mit einem zahlenmittleren Molekulargewicht von 60 bis 250 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(hydroxyethyl)hydrochinon und ethoxylierte Bisphenole. Es können auch Gemische der vorgenannten Kettenverlängerer eingesetzt werden. Daneben können auch kleinere Mengen an Triolen zugesetzt werden.

Als Katalysatoren (e) können die üblichen aus der Polyurethanchemie bekannten Katalysatoren eingesetzt werden. Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titansäureester, Eisenverbindungen, Wismutverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt ist Dibutylzinndilaurat.

Als Hilfs- und Zusatzstoffe (f) können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Darüber hinaus können auch in geringen Mengen monofunktionelle Kettenabbrecher (g), wie z. B. Monoalkohole (Oktanol und Stearylalkohol) oder Monoamine (Butylamin und Stearylamin) eingesetzt werden, um ein TPU-Molekulargewicht einzustellen. Diese dienen teilweise auch als Entformungshilfen.

Besonders bevorzugt werden die TPU aus folgenden Hauptkomponenten hergestellt:
a) 1,4-Butandiol-polyadipate, 1,6-Hexandiol-polyadipate, Ethandiol-1,4-butandiol-polyadipate, 1,6-Hexandiol-neopentylglykol-polyadipate, 1,6-Hexandiol-1,4-butandiol-polyadipate und deren Mischungen
b) Polypropylenoxide oder Polyethylen-/Polypropylenoxide mit Molekulargewichten von 4000 bis 12000 g/mol
c) 4,4'-Diphenylmethandiisocyanat und/oder Hexamethylendiisocyanat
d) 1,4-Butandiol, Ethandiol und/oder 1,6-Hexandiol.

Ein weiterer Gegenstand der Erfindung ist ein Verfahren zur kontinuierlichen Herstellung des erfindungsgemäßen thermoplastisch verarbeitbaren Polyurethans, wobei die Komponenten (a), (b), (c) und (d) sowie gegebenenfalls (e) bis (g) in einen Reaktionsextruder dosiert und beim Durchgang durch den Extruder zum Polyurethan reagieren.

Die erfindungsgemäßen TPU können für die Herstellung von Formkörpern, die tiefen Temperaturen(<0°C) ausgesetzt werden, verwendet werden, z.B. zur Herstellung von Skischuhen.

Ein weiterer Gegenstand der Erfindung ist die Verwendung der Polyetherpolyole (b) mit einer zahlenmittleren Funktionalität von 1,9 bis 2,1 und einem zahlenmittleren Molekulargewicht von 4000 bis 20000 g/mol, auf Basis von Propylenoxid oder Propylenoxid/Ethylenoxid-Gemischen als Tieftemperatur-Schlagzähmodifikator bei der Herstellung von thermoplastisch verarbeitbaren Polyurethanen

Die Erfindung soll anhand der nachfolgenden Beispiele näher erläutert werden.

### Beispiele:

Eingesetzte Rohstoffe
Tyzor® AA105: Titankatalysator von Dorf Ketal
Polyether® LP112: Polypropylenglykol mit einem Molekulargewicht von 1000 g/mol, Handelsprodukt der Covestro AG
Irganox® 1010: Antioxidanz der BASF SE
Licowax® E: Entformungsmittel von Clariant
Baysilone® M1000: Silikonöl von Momentive
Stabaxol® I: Hydrolyseschutzmittel von Rheinchemie

**TPU-Rezeptur Beispiel 1:**

| | |
|---|---|
| Polybutandiol-1,4-adipat (Molekulargewicht ca. 2250 g/mol): | 36,30 Gew.-% |
| 1,4-Butandiol: | 14,62 Gew.% |
| 1,6-Hexandiol: | 0,91 Gew.% |
| 4,4'-Diphenylmethandiisocyanat (4,4'-MDI): | 46,57 Gew. % |
| 0,1%ig Lösung von Tyzor® AA 105 in Polyether LP112 : | 0,15 Gew.% |
| Irganox® 1010: | 0,24 Gew% |
| Licowax® E: | 0,30 Gew.% |
| Stearylalkohol: | 0,24 Gew.% |
| Baysilon® M1000: | 0,02 Gew.% |
| Triphenylphosphin: | 0,47 Gew% |
| Stabaxol® I: | 0,18 Gew.% |

### Beispiel 1 (Herstellung des TPU 1):

In einem Reaktionsgefäß wurden 36,30 Gew.-% Polybutandiol-1,4-adipat (Molekulargewicht ca. 2250 g/mol) vorgelegt. Darin wurden 0,24 Gew.% Irganox® 1010, 0,3 Gew% Licowax® E, 0,24 Gew.% Stearyalkohol, 0,02 Gew.% Baysilon® M1000 0,47 Gew.% Triphenylphosphin und 0,18 Gew.% Stabaxol® I gelöst. Nach dem Aufheizen auf 180°C wurden 46,6 Gew. % 4,4'-Diphenylmethandiisocyanat (MDI) unter Rühren zugesetzt, und die Reaktion mit Hilfe von 10 ppm Tyzor® AA105 (bezogen auf die Polyolmenge) durchgeführt.

Nach beendeter Reaktion wurden unter Rühren 14,6 Gew.% 1,4-Butandiol und 0,9 Gew.% 1,6-Hexandiol zugeführt, wobei das NCO/OH-Verhältnis aller Komponenten bei 1,0 lag. Die Polymerschmelze wurde intensiv bis zur maximal rührbaren Viskosität gemischt und dann auf ein Blech gegossen. Anschließend wurde die Polymerschmelze 30 Minuten bei 120°C getempert.

### Herstellung der TPU 2 bis 11:

Die Herstellung erfolgte analog Beispiel 1, jedoch wurden anstelle von Polybutandiol-1,4-adipat die in der Tabelle 1 angegebenen Gemische aus Polybutandiol-1,4-adipat und der entsprechenden Menge in Gewichtsprozent an Polyetherpolyol eingesetzt.

### Messungen:

Die Messung der Härte erfolgte nach ISO7619-1:2012-02 und die Messungen im Zugversuch nach ISO 53504:2009-10.

### Charpy Schlagzähigkeitsprüfung

Von den Spritzgießkörpern wurden die Charpy Schlagzähigkeitsprüfungen nach DIN EN ISO179/1eA:2010 bei -20°C Der Probekörper hat folgende Dimensionen: 80±2mm Länge, 10,0±0,2mm Breite und 4,0±0,2mm Dicke. Der Probekörper ist gekerbt. Der Kerbgrundradius r_{N} beträgt 0,25±0,05mm (siehe Abbildung 1)

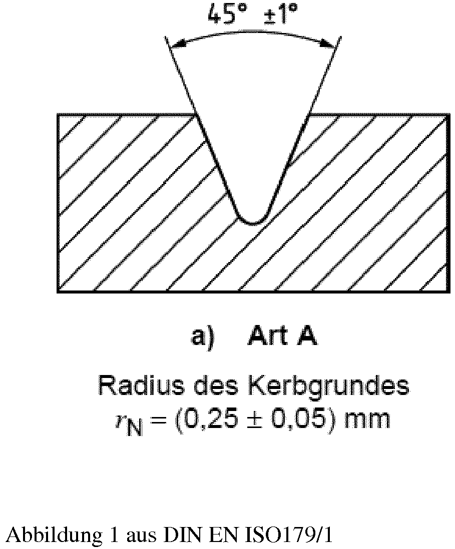

In folgender Tabelle 1 sind die gemessenen Eigenschaften der Beispiele beschrieben:

**Tabelle 1: Zusammensetzung und Eigenschaften der TPU der Beispiele 1 bis 11**

| **Beispiel** | **Menge an Polyetherpolyol** | **Härte** | **10% Modul** | **100% Modul** | **Charpy Mittelwert und Bruchart** |
|---|---|---|---|---|---|
| | | | **[MPa]** | **[MPa]** | **[KJ/m²]** |
| **1** | 0 Gew.-% | 64 Shore D | 16,60 | 27,70 | 4,99 s⁺) |
| **2*⁾** | 10 Gew.-% | 64 Shore D | 18,90 | 28,80 | 8,29 s⁺⁾ |
| | Acclaim® 4200¹⁾ | | | | |
| **3*⁾** | 15 Gew.-% | 64 Shore D | 20,10 | 28,90 | 10,76 s⁺⁾ |
| | Acclaim® 4200¹⁾ | | | | |
| **4*⁾** | 20 Gew.-% | 64 Shore D | 20,90 | 28,60 | 13,26 s⁺⁾ |
| | Acclaim® 4200¹⁾ | | | | |
| **5*⁾** | 10 Gew.-% | 64 Shore D | 19,0 | 29,40 | 5,98 s⁺⁾ |
| | Acclaim® 8200²⁾ | | | | |
| **6*⁾** | 10 Gew.-% | 64 ShoreD | 19,2 | 31,9 | 8,19 s⁺⁾ |
| | Acclaim® 12200³⁾ | | | | |
| **7*⁾** | 10 Gew.-% | 64 Shore D | 19 | 31,6 | 7,06 s⁺⁾ |
| | Acclaim® 18200⁴⁾ | | | | |
| **8** | 10 Gew.-% | 64 ShoreD | 16,5 | 29,6 | 4,4 s⁺⁾ |
| | Acclaim® 2200⁵⁾ | | | | |
| **9** | 20 Gew.-% | 64 ShoreD | 19,0 | 29,4 | 5,89 s⁺⁾ |
| | Acclaim® 2200⁵⁾ | | | | |
| **10** | 10 Gew.-% | 64 ShoreD | 16,7 | 29,5 | 6,49 s⁺⁾ |
| | Terathane® 2000⁶⁾ | | | | |
| **11** | 10 Gew.-% | 64 ShoreD | 15,7 | 28 | 7,16 s⁺⁾ |
| | Terathane®2900⁷⁾ | | | | |

| | | | | | |
|---|---|---|---|---|---|
| *⁾ Erfindungsgemäßes Beispiel ¹⁾ Acclaim® 4200 ist ein lineares Polypropylenetherpolyol (Handelsprodukt der Covestro Deutschland AG, Molekulargewicht ca. 4000) ²⁾ Acclaim® 8200 ist ein lineares Polypropylenetherpolyol (Handelsprodukt der Covestro Deutschland AG, Molekulargewicht ca.8000) ³⁾ Acclaim® 12200 ist ein lineares Polypropylenetherpolyol (Handelsprodukt der Covestro Deutschland AG, Molekulargewicht ca. 12000) ⁴⁾ Acclaim® 18200 ist ein lineares Polypropylenetherpolyol (Handelsprodukt der Covestro Deutschland AG, Molekulargewicht ca.18000) ⁵⁾ Acclaim® 2200 ist ein lineares Polypropylenetherpolyol (Handelsprodukt der Covestro Deutschland AG, Molekulargewicht ca. 2000) ⁶⁾ Terathane® 2000 ist ein lineares Polytetramethylenetherglglykol (Handelsprodukt von Invista, Molekulargewicht ca. 2000) ⁷⁾ Terathane® 2900 ist ein lineares Polytetramethylenetherglglykol (Handelsprodukt von Invista, Molekulargewicht ca. 2900) ⁺⁾ Bruchart: s=spröde und z=zäh | | | | | |

Man erkennt, dass bei den erfindungsgemäßen Beispielen, die Polypropylenetherpolyole mit Molekulargewichten von 4000 bis 20000 g/mol enthalten, die Charpy-Werte erheblich höher sind, als in Beispiel 1, das kein Polyetherpolyol enthält, und in den Beispielen 8 bis 11, die nicht die Polyetherpolyole gemäß der vorliegenden Erfindung enthalten. Somit ist die Schlagzähigkeit der erfindungsgemäßen TPU (Beispiele 2 bis 7) besser als die der TPU aus den Vergleichsbeispielen 1 und 8 bis 11.

## Patentansprüche

1. Thermoplastisch verarbeitbare Polyurethanelastomere (TPU) mit einer Härte von 56 bis 85 Shore D (gemäß ISO 7619-1:2012-02) erhältlich aus der Reaktion der Komponenten
a) ein oder mehrere im Wesentlichen lineare Polyesterpolyole mit einer zahlenmittleren Funktionalität von 1,8 bis 2,2 und einem zahlenmittleren Molekulargewicht von 500 bis 4000 g/mol auf Basis von Dicarbonsäuren ausgewählt aus der Gruppe bestehend aus Adipinsäure, Bernsteinsäure, Terephthalsäure und deren Derivaten und auf Basis von Dialkoholen ausgewählt aus der Gruppe bestehend aus Ethandiol, 1,4-Butandiol, 1,3-Propandiol, 1,6-Hexandiol und Neopentylglycol, und gegebenenfalls 0 bis 60 Gew.-% Polycarbonatdiol auf Basis von 1,6-Hexandiol,
b) ein oder mehrere im Wesentlichen lineare Polyetherpolyole mit einer zahlenmittleren Funktionalität von 1,9 bis 2,1 und einem zahlenmittleren Molekulargewicht von 4000 bis 20000 g/mol auf Basis von Propylenoxid oder Propylenoxid/Ethylenoxid-Gemischen,
c) ein oder mehrere lineare organische Diisocyanate,
d) ein oder mehrere Diole mit einem zahlenmittleren Molekulargewicht von 60 bis 250 g/mol,
in Gegenwart von
e) gegebenenfalls Katalysatoren,
f) gegebenenfalls Hilfs- und/oder Zusatzstoffen,
g) gegebenenfalls monofunktionellen Kettenabbrechern,
wobei das molare Verhältnis der NCO-Gruppen zu den OH-Gruppen von 0,9 zu 1 bis 1,1 zu 1 und das Gewichtsverhältnis der Polyetherpolyole (b) zu den Polyesterpolyolen (a) von 5 zu 95 bis 30 zu 70 beträgt.

2. Thermoplastisch verarbeitbares Polyurethanelastomer gemäß Anspruch 1, **dadurch gekennzeichnet, dass** die Komponente (a) ein lineares Polyesterpolyol mit einem zahlenmittleren Molekulargewicht von 900 bis 2500 g/mol und/oder ein Polycarbonatdiol mit einem zahlenmittleren Molekulargewicht von 1000 bis 4000 g/mol ist.

3. Thermoplastisch verarbeitbares Polyurethanelastomer gemäß Anspruch 1, **dadurch gekennzeichnet, dass** die Komponente (b) ein lineares Polyetherpolyol mit einem zahlenmittleren Molekulargewicht von 4000 bis 12000 g/mol, bevorzugt von 4000 bis 8500 g/mol ist.

4. Thermoplastisch verarbeitbares Polyurethanelastomer gemäß Anspruch 1, **dadurch gekennzeichnet, dass** die Komponente (c) aus einem oder mehreren Diisocyanaten ausgewählt aus der Gruppe bestehend aus 4,4'-Diphenylmethandiisocyanat, 4,4'-Dicyclohexylmethandiisocyanat und 1,6-Hexamethylendiisocyanat besteht.

5. Thermoplastisch verarbeitbares Polyurethanelastomer gemäß Anspruch 1, **dadurch gekennzeichnet, dass** die Komponente (d) aus einem oder mehreren Diolen ausgewählt aus der Gruppe bestehend aus 1,4-Butandiol, 1,3-Propandiol, 1,2-Ethylenglykol, 1,6-Hexandiol und Hydrochinonmonomethylether besteht.

6. Thermoplastisch verarbeitbares Polyurethanelastomer gemäß Anspruch 1, **dadurch gekennzeichnet, dass** die Komponente (a) eine oder mehrere Verbindungen aus der gruppe bestehend aus 1,4-Butandiol-polyadipaten, 1,6-Hexandiol-polyadipaten, Ethandiol-1,4-butandiol-polyadipaten, 1,6-Hexandiol-neopentylglykol-polyadipaten, 1,6-Hexandiol-1,4-butandiol-polyadipaten, die Komponente (b) Polypropylenoxide oder Polyethylen-/Polypropylenoxide mit Molekulargewichten von 4000 bis 12000 g/mol, die Komponente (c) 4,4'-Diphenylmethandiisocyanat und/oder Hexamethylendiisocyanat und die Komponente (d) 1,4-Butandiol, Ethandiol und/oder 1,6-Hexandiol sind.

7. Verfahren zur kontinuierlichen Herstellung eines thermoplastisch verarbeitbaren Polyurethans gemäß Anspruch 1, wobei die Komponenten (a), (b), (c) und (d) sowie gegebenenfalls (e) bis (g) in einen Reaktionsextruder dosiert und beim Durchgang durch den Extruder zum Polyurethan reagieren.

8. Verwendung der TPU gemäß den Ansprüchen 1 bis 6 für die Herstellung von Formkörpern, die tiefen Temperaturen(<0°C) ausgesetzt werden.

9. Verwendung der TPU gemäß den Ansprüchen 1 bis 6 für die Herstellung von Skischuhen.

10. Verwendung der Polyetherpolyole (b) mit einer zahlenmittleren Funktionalität von 1,9 bis 2,1 und einem zahlenmittleren Molekulargewicht von 4000 bis 20000 g/mol, auf Basis von Propylenoxid oder Propylenoxid/Ethylenoxid-Gemischen als Tieftemperatur-Schlagzähmodifikator bei der Herstellung von thermoplastisch verarbeitbaren Polyurethanen.

## Claims

1. Thermoplastically processable polyurethane elastomers (TPU) having a hardness of 56 to 85 Shore D (according to ISO 7619-1:2012-02) obtainable from the reaction of the components
a) one or more substantially linear polyester polyols having a number-average functionality of 1.8 to 2.2 and a number-average molecular weight of 500 to 4000 g/mol based on dicarboxylic acids selected from the group consisting of adipic acid, succinic acid, terephthalic acid and derivatives thereof and based on dialcohols selected from the group consisting of ethanediol, 1,4-butanediol, 1,3-propanediol, 1,6-hexanediol and neopentyl glycol and optionally 0% to 60% by weight of polycarbonate diol based on 1,6-hexanediol,
b) one or more substantially linear polyether polyols having a number-average functionality of 1.9 to 2.1 and a number-average molecular weight of 4000 to 20 000 g/mol based on propylene oxide or propylene oxide/ethylene oxide mixtures,
c) one or more linear organic diisocyanates,
d) one or more diols having a number-average molecular weight of 60 to 250 g/mol,
in the presence of
e) optionally catalysts,
f) optionally auxiliary and/or additive substances,
g) optionally monofunctional chain terminators, wherein the molar ratio of NCO groups to OH groups is from 0.9:1 to 1.1:1 and the weight ratio of the polyether polyols (b) to the polyester polyols (a) is from 5:95 to 30:70.

2. Thermoplastically processable polyurethane elastomer according to Claim 1, **characterized in that** the component (a) is a linear polyester polyol having a number-average molecular weight of 900 to 2500 g/mol and/or a polycarbonate diol having a number-average molecular weight of 1000 to 4000 g/mol.

3. Thermoplastically processable polyurethane elastomer according to Claim 1, **characterized in that** the component (b) is a linear polyether polyol having a number-average molecular weight of 4000 to 12 000 g/mol, preferably of 4000 to 8500 g/mol.

4. Thermoplastically processable polyurethane elastomer according to Claim 1, **characterized in that** the component (c) consists of one or more diisocyanates selected from the group consisting of 4,4'-diphenylmethane diisocyanate, 4,4'-dicyclohexylmethane diisocyanate and 1,6-hexamethylene diisocyanate.

5. Thermoplastically processable polyurethane elastomer according to Claim 1, **characterized in that** the component (d) consists of one or more diols selected from the group consisting of 1,4-butanediol, 1,3-propanediol, 1,2-ethylene glycol, 1,6-hexanediol and hydroquinone monomethyl ether.

6. Thermoplastically processable polyurethane elastomer according to Claim 1, **characterized in that** the component (a) is selected from one or more compounds from the group consisting of 1,4-butanediol polyadipates, 1,6-hexanediol polyadipates, ethanediol 1,4-butanediol polyadipates, 1,6-hexanediol neopentyl glycol polyadipates, 1,6-hexanediol 1,4-butanediol polyadipates, the component (b) is selected from polypropylene oxides or polyethylene/polypropylene oxides having molecular weights of 4000 to 12 000 g/mol, the component (c) is selected from 4,4'-diphenylmethane diisocyanate and/or hexamethylene diisocyanate and the component (d) is selected from 1,4-butanediol, ethanediol and/or 1,6-hexanediol.

7. Process for continuous production of a thermoplastically processable polyurethane according to Claim 1, wherein the components (a), (b), (c) and (d) and optionally (e) to (g) are metered into a reaction extruder and while passing through the extruder react to afford the polyurethane.

8. Use of the TPU according to Claims 1 to 6 for producing molded articles that are subjected to low temperatures (<0°C).

9. Use of the TPU according to Claims 1 to 6 for producing ski shoes.

10. Use of the polyether polyols (b) having a number-average functionality of 1.9 to 2.1 and a number-average molecular weight of 4000 to 20 000 g/mol based on propylene oxide or propylene oxide/ethylene oxide mixtures as a low-temperature impact modifier in the production of thermoplastically processable polyurethanes.

## Revendications

1. Élastomères de polyuréthane pouvant être traités de manière thermoplastique (TPU) dotés d'une dureté de 56 à 85 Shore D (selon la norme ISO 7619-1:2012-02) pouvant être obtenus par la réaction des composants
a) un ou plusieurs polyesterpolyols essentiellement linéaires dotés d'une fonctionnalité moyenne en nombre de 1,8 à 2,2 et d'un poids moléculaire moyen en nombre de 500 à 4 000 g/mole à base d'acides dicarboxyliques choisis dans le groupe constitué par l'acide adipique, l'acide succinique, l'acide téréphtalique et leurs dérivés et à base de dialcools choisis dans le groupe constitué par l'éthanediol, le 1,4-butanediol, le 1,3-propanediol, le 1,6-hexanediol et le néopentylglycol, et éventuellement 0 à 60 % en poids d'un polycarbonatediol à base de 1,6-hexanediol,
b) un ou plusieurs polyétherpolyols essentiellement linéaires dotés d'une fonctionnalité moyenne en nombre de 1,9 à 2,1 et d'un poids moléculaire moyen en nombre de 4 000 à 20 000 g/mole à base d'oxyde de propylène ou de mélanges d'oxyde de propylène/oxyde d'éthylène,
c) un ou plusieurs diisocyanates organiques linéaires,
d) un ou plusieurs diols dotés d'un poids moléculaire moyen en nombre de 60 à 250 g/mole,
en présence de
e) éventuellement des catalyseurs,
f) éventuellement des auxiliaires et/ou des additifs,
g) éventuellement des agents d'interruption de chaînes monofonctionnels,
le rapport molaire des groupes NCO sur les groupes OH étant de 0,9 sur 1 à 1,1 sur 1 et le rapport en poids des polyétherpolyols (b) sur les polyesterpolyols (a) étant de 5 sur 95 à 30 sur 70.

2. Élastomère de polyuréthane pouvant être traité de manière thermoplastique selon la revendication 1, **caractérisé en ce que** le composant (a) est un polyesterpolyol linéaire doté d'un poids moléculaire moyen en nombre de 900 à 2 500 g/mole et/ou un polycarbonatediol doté d'un poids moléculaire moyen en nombre de 1 000 à 4 000 g/mole.

3. Élastomère de polyuréthane pouvant être traité de manière thermoplastique selon la revendication 1, **caractérisé en ce que** le composant (a) est un polyétherpolyol linéaire doté d'un poids moléculaire moyen en nombre de 4 000 à 12 000 g/mole, préférablement de 4 000 à 8 500 g/mole.

4. Élastomère de polyuréthane pouvant être traité de manière thermoplastique selon la revendication 1, **caractérisé en ce que** le composant (c) est constitué d'un ou plusieurs diisocyanates choisis dans le groupe constitué par le 4,4'-diisocyanate de diphénylméthane, le 4,4'-diisocyanate de dicyclohexylméthane et le 1,6-diisocyanate d'hexamethylène.

5. Élastomère de polyuréthane pouvant être traité de manière thermoplastique selon la revendication 1, **caractérisé en ce que** le composant (d) est constitué d'un ou plusieurs diols choisis dans le groupe constitué par le 1,4-butanediol, le 1,3-propanediol, le 1,2-éthylèneglycol, le 1,6-hexanediol et le monométhyléther d'hydroquinone.

6. Élastomère de polyuréthane pouvant être traité de manière thermoplastique selon la revendication 1, **caractérisé en ce que** le composant (a) est un ou plusieurs composés du groupe constitué par des polyadipates de 1,4-butanediol, des polyadipates de 1,6-hexanediol, des polyadipates d'éthanediol-1,4-butanediol, des polyadipates de 1,6-hexanediol-néopentylglycol, des polyadipates de 1,6-hexanediol-1,4-butanediol, le composant (b) est un poly(oxyde de propylène) ou un poly(oxyde d'éthylène)/poly(oxyde de propylène) dotés de poids moléculaires de 4 000 à 12 000 g/mole, le composant (c) est le 4,4'-diisocyanate de diphénylméthane ou le diisocyanate d'hexamethylène et le composant (d) est le 1,4-butanediol, l'éthanediol et/ou le 1,6-hexanediol.

7. Procédé pour la préparation de manière continue d'un polyuréthane pouvant être traité de manière thermoplastique selon la revendication 1, les composants (a), (b), (c) et (d) ainsi qu'éventuellement (e) à (g) étant ajoutés dans une extrudeuse de réaction et, lors du passage par l'extrudeuse, réagissent pour donner un polyuréthane.

8. Utilisation des TPU selon les revendications 1 à 6 pour la préparation de corps moulés qui sont exposés à des températures basses (< 0 °C).

9. Utilisation des TPU selon les revendications 1 à 6 pour la préparation de chaussures de ski.

10. Utilisation des polyétherpolyols (b) dotés d'une fonctionnalité moyenne en nombre de 1,9 à 2,1 et d'un poids moléculaire moyen en nombre de 4 000 à 20 000 g/mole, à base d'oxyde de propylène ou de mélanges d'oxyde de propylène/oxyde d'éthylène en tant que modificateur de résistance aux chocs à basse température lors de la préparation de polyuréthanes pouvant être traités de manière thermoplastique.
